(19) Europäisches Patentamt
European Patent Office
Office européen des brevets

(11) Publication number: **0 012 630**
**B1**

(12) # EUROPEAN PATENT SPECIFICATION

(45) Date of publication of patent specification: **18.05.83**

(51) Int. Cl.$^3$: **B 01 D 13/04**, A 61 M 1/03

(21) Application number: **79302945.5**

(22) Date of filing: **18.12.79**

(54) **Process for producing a cellulose acetate-type permselective membrane, permselective membrane thus produced, and use of such membrane in artificial kidney.**

(30) Priority: **19.12.78 JP 155761/78**

(43) Date of publication of application:
**25.06.80 Bulletin 80/13**

(45) Publication of the grant of the patent:
**18.05.83 Bulletin 83/20**

(84) Designated Contracting States:
**DE FR GB**

(56) References cited:
FR - A - 1 507 885
GB - A - 903 270
GB - A - 1 396 092
US - A - 3 666 508
US - A - 3 883 626
US - A - 3 917 777

CHEMICAL ABSTRACTS, vol. 87, no. 26, December 26, 1977, page 82, abstract 203319e. Columbus, Ohio, USA.

(73) Proprietor: **TEIJIN LIMITED**
**11, 1-Chome, Minamihonmachi Higashi-ku**
**Osaka-shi Osaka (JP)**

(72) Inventor: **Koga, Masahiro**
**2-1, Hinode-machi**
**Iwakuni-shi, Yamaguchi-ken (JP)**
Inventor: **Hasegawa, Ryozo**
**2-1, Hinode-machi**
**Iwakuni-shi, Yamaguchi-ken (JP)**

(74) Representative: **Myerscough, Philip Boyd et al,**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 012 630 B1

# Process for producing a cellulose acetate-type permselective membrane, permselective membrane thus produced, and use of such membrane in artificial kidney

This invention relates to the production of cellulose acetate-type permselective membranes, and more specifically to a process for producing a permselective membrane comprising a base of cellulose acetate and having very high water-permeability and protein-retention which is particularly suitable as hemofilters for artificial kidneys.

Some permselective membranes comprising a base of cellulose acetate have been suggested in the past. The most typical example is a cellulose acetate permselective membrane called to Loeb-type membrane disclosed in U.S. Patents 3,133,132 and 3,133,137. The Loeb-type permselective membrane was developed in order to separate water from saline solutions. It is produced by dissolving a film-forming cellulose acetate and an aqueous solution of perchloric acid in an organic solvent, casting the solution to form a membrane having a substantially uniform thickness, evaporating a part of the solvent for a certain period of time, and then dipping the cast membrane in water to remove the perchlorate salt.

As an improvement of the Loeb-type membrane, Manjikian et al. added a water-soluble additive compound such as urea, glyoxal, $H_2O_2$, dimethylformamide (DMF), dimethylsulfoxide (DMSO) and acetic acid to a cellulose acetate casting solution, and examined the effect of the additive compounds on the properties of the resulting membrane. [Proc. First International Symp. on Water Desalination Washington D.C. (Pub. U.S. Dept. Interior, O.S.W.) *2*, 159 (1965)].

The Loeb-type and Manjikian-type membranes are reverse osmosis membranes for the separation of water from saline solutions. They have a salt rejection of about 90%, but their water ultrafiltration rate (to be sometimes abbreviated "UFR") is at most 2 $ml/m^2 . hr . mmHg$ ($0.27\ l/m^2 . hr . Pa$). Accordingly, these types of membranes cannot be applied to hemofilters for artificial kidneys which are the main use contemplated by the present invention.

Various permselective membranes of varying water UFR and/or varying retentions of solutes have been suggested recently by modifying the composition of a cellulose ester-containing film-forming dope. For example, B. Kunst et al. disclosed in Journal of Applied Polymer Science, *18*, 3423 (1974) membranes having a water UFR of 10 to 60 $ml/m^2 . hr . mmHg$ (1.3 to 8.0 $l/m^2 . hr . Pa$) and a sodium chloride retention of 0 to 50%. U.S. Patent No. 3,494,780 discloses a process for producing a permselective membrane which comprises incorporating a polyhydric alcohol which is a non-plasticizer for a cellulose ester in a plasticized cellulose ester, melting the mixture and forming it into a film, and leaching the resulting film with a solvent which is a non-solvent for the ester and is capable of dissolving the plasticizer and the polyhydric alcohol, thereby to remove the plasticizer and the polyhydric alcohol. It is shown in the Patent that the water-permeability of the resulting film is 5 to 8 times as high as that of a commercially available regenerated cellulose dialysis tube (water UFR=1.5—2 $ml/m^2 . hr . mmHg$ 0.20—0.27 $l/m^2 . hr . Pa$).

U.S. Patent 4,147,622 discloses a process for producing an asymmetric permselective cellulose acetate membrane having a skin layer on at least one surface thereof, which comprises casting a mixed solution consisting of 12 to 20% of cellulose triacetate, at least 40% of acetone, a solvent (e.g., dioxane or dimethylsulfoxide) for the cellulose triacetate and a swelling agent (e.g., formamide) for the cellulose triacetate.

U.S. Patent 4,035,459 discloses cellulose acetate membrane in the form of hollow fibers having an outside surface formed by a dry phase-inversion method and an inside surface formed by a wet phase-inversion method, the space between the two surfaces being of asymmetrical structure.

These conventional cellulose ester-type permselective membranes are based on the technique of producing reverse osmosis membranes, and are sometimes directed to the separation of low-molecular-weight materials such as sodium chloride. Their ultrafiltration rate is low. In other words, they restrict the permeation and diffusion of low-molecular-weight materials, and are undesirable in removing low-molecular-weight to medium-molecular-weight materials such as waste matter of the blood by filtration and diffusion, as in artificial kidneys.

The present inventor extensively considered this problem, and found that the properties (especially porosity and water content) of the cellulose esters and their performances (the water ultrafiltration rate; the retentions of low molecular-weight, medium-molecular-weight and high-molecular-weight materials) can be selected within wide ranges by using dimethylsulfoxide as a main film-forming solvent (see Japanese Patent Application No. 96078/78). On further investigations, it has now been found that by incorporating a certain additive in a film-forming solution containing dimethylsulfoxide, a permselective membrane having superior processability and performances and being applicable to a broad range of utility can be obtained. Thus, according to this invention, there can be provided a cellulose acetate-type permselective membrane having a high water ultrafiltration rate and a high retention of high-molecular-weight materials under a low operating pressure.

The present invention provides a process for producing a cellulose acetate-type permselective membrane having very high water-permeability and protein retention by casting a raw membrane from a dope comprising cellulose acetate and, as solvent, dimethylsulfoxide and solidifying the resulting raw

membrane with a coagulating agent which is a non-solvent for the cellulose acetate and miscible with the solvent, characterised in that there is used a dope comprising

(a) 1 part by weight of a cellulose acetate, and
(b) 2 to 20 parts by weight of a mixed solvent composed of (i) dimethylsulfoxide and (ii) at least one water-soluble organic compound selected from monohydric alcohols having 2 to 5 carbon atoms, dihydric alcohols of the formula HO—(—RO—)$_n$—H wherein R is an alkylene group having 2 or 3 carbon atoms and n is an integer of 1 to 16, and carboxylic acids having 1 or 2 carbon atoms, the weight ratio of said water-soluble organic compound to dimethylsulfoxide being not more than 1:1.

Using the mixed solvent in accordance with the invention there can be produced permselective membranes for ultrafiltration of increased water flux with a high retention of proteins. These permselective membranes comprising cellulose acetate as a base have very high water permeability and protein retention under low operating pressures and are suitable as hemofilters for artificial kidneys.

The cellulose acetate used as a material for a membrane in accordance with this invention may be any film-forming cellulose acetate heretofore used in the field of ultrafiltration and reverse osmosis. Specific examples include cellulose diacetate having an average acetyl content of 35% to 41%, cellulose triacetate having an average acetyl content of 41% to 45%, and mixtures of these. A material composed mainly of cellulose diacetate is preferred.

The term "material composed mainly of cellulose diacetate", as used herein, means not only cellulose diacetate alone, but also a mixture of cellulose diacetate and cellulose triacetate with a cellulose triacetate content of at most 30% by weight, preferably not more than 10% by weight, based on the total weight of the cellulose acetates.

The most characteristic feature of the process of this invention is that as a solvent for preparing a cellulose acetate-containing dope by dissolving cellulose acetate, there is used a mixture comprising

(i) dimethylsulfoxide (abbreviated to "DMSO"), and
(ii) at least one water-soluble organic compound selected from monohydric alcohols having 2 to 5 carbon atoms, dihydric alcohols of the formula HO—(—RO—)$_n$—H wherein R is an alkylene group having 2 or 3 carbon atoms and n is an integer of 1 to 16 and carboxylic acids having 1 or 2 carbon atoms.

The use of the above-specified mixed solvent has made it possible to provide very easily a cellulose acetate-type permselective membrane having very high water permeability and protein retention by a casting method.

The water-soluble organic compounds used in the mixed solvent are described below in more detail.

(a) Monohydric alcohols having 2 to 5 carbon atoms

These are linear or branched saturated or unsaturated aliphatic monohydric alcohols having 2 to 5 carbon atoms such as lower alkanols (e.g., ethyl alcohol, n- or iso-propyl alcohol, n-, iso-, sec- or tert-butyl alcohol, n-pentyl alcohol, and iso-amyl alcohol), and alkenols such as allyl alcohol and butenyl alcohol. Of these, lower alkanols having 2 to 4 carbon atoms such as ethyl alcohol, propyl alcohol and butyl alcohol, and allyl alcohol are preferred. Ethyl alcohol and tert-butyl alcohol are most preferred.

(b) Dihydric alcohols of the formula

$$HO—(—RO—)_n—H \qquad (I)$$

In formula (I), the $C_2$—$C_3$ alkylene group R may be linear or branched, and includes $—CH_2CH_2—$, $—CH_2CH_2CH_2—$, and $—CH(CH_3)CH_2—$, and n is an integer of from 1 to 16, preferably from 1 to 10. If n is at least two, the two or more groups R may be different from each other. Examples of such dihydric alcohols are ethylene glycol, diethylene glycol, triethylene glycol, tetraethylene glycol, polyethylene glycol having an average molecular weight of 400 (n=about 9), polyethylene glycol having an average molecular weight of 600 (n=about 13), propylene glycol, dipropylene glycol, and 1,3-propanediol. Of these, ethylene glycol, diethylene glycol, polyethylene glycol having an average molecular weight of 400 and propylene glycol are preferred. Diethylene glycol and polyethylene glycol having an average molecular weight of 400 are most preferred.

(c) Carboxylic acids having 1 or 2 carbon atoms

These carboxylic acids include formic acid and acetic acid, the former being especially preferred.

The above water-soluble organic compounds may be used singly, or as a combination of two or more. The especially preferred water-soluble organic compounds in this invention are ethyl alcohol and tert-butyl alcohol.

The weight ratio of the water-soluble organic compound to DMSO is important. The water-soluble organic compound is mixed in a weight ratio to DMSO of not more than 1 (water-soluble organic compound/DMSO≦1). If this weight ratio is more than 1, various inconveniences will be caused. For example, the solubility of cellulose acetate in DMSO is reduced, and DMSO does not function as a solvent, or the resulting dope becomes extremely viscous and undergoes gellation.

The preferred weight ratio of the water-soluble organic compound to DMSO in the mixed solvent is from 0.05 to 0.7. The optimum range differs depending upon the water-soluble organic compound to be mixed. The optimum mixing ratios of typical water-soluble organic compounds to DMSO are listed in Table 1 below.

TABLE 1

| Water-soluble organic compound | Optimum weight ratio of the water-soluble organic compound to DMSO |
|---|---|
| Ethyl alcohol | 0.23—0.45 |
| Isopropyl alcohol | 0.10—0.33 |
| tert-Butyl alcohol | 0.40—1.00 |
| iso-Amyl alcohol | 0.60—1.00 |
| Allyl alcohol | 0.05—0.10 |
| Ethylene glycol | 0.05—0.33 |
| Diethylene glycol | 0.05—0.14 |
| Polyethylene glycol (molecular weight 400) | 0.05—0.14 |
| Propylene glycol | 0.05—0.21 |
| Formic acid | 0.05—0.23 |
| Acetic acid | 0.23—0.45 |

The present invention does not exclude the use of a dope which contains a third component in addition to cellulose acetate and the mixed solvent. Such a third component may be incorporated as required in an amount which does not substantially affect the present invention. Examples of the third component are water-soluble inorganic compounds such as magnesium perchlorate, magnesium chloride, lithium chloride, lithium bromide, lithium nitrate, calcium chloride, and calcium nitrate, and water-soluble polymeric compounds such as polyethylene glycol (molecular weight more than 800), polyvinyl alcohol, and polyvinyl pyrrolidone.

The amounts of such an additive to be incorporated in the mixed solvent is not critical, but can be varied widely according to its type and the purpose of addition. Generally, the amount is not more than 25% based on the total weight of DMSO and the water-soluble organic compound, preferably not more than 10% in order to make use of the properties of the mixture of the water-soluble organic compound and DMSO.

According to this invention, the cellulose acetate is dissolved in the mixed solvent to prepare a dope containing cellulose acetate. The cellulose acetate may be mixed with the water-soluble organic compound or DMSO after it is dissolved or dispersed in DMSO or the water-soluble organic compound. Or the cellulose acetate may be dissolved directly in the mixed solvent of DMSO and the water-soluble organic compound.

In any case, the amount of the mixed solvent is 2 to 20 parts by weight, preferably 2.2 to 14 parts by weight, more preferably 2.3 to 8 parts by weight, per part by weight of the cellulose acetate.

The water permeability of the membrane in accordance with this invention varies between 5 and 2000 ml/$m^2$ . hr . mmHg (0.67 and 270 l/$m^2$ . hr . Pa). For use as an ultrafiltration membrane, the membrane of this invention preferably has a water permeability of at least 10 ml/$m^2$ . hr . mmHg (1.3 l/$m^2$ . hr . Pa). From the standpoint of the strength of the membrane, the amount of the mixed solvent is preferably not more than 10 parts by weight. A water permeability of not more than 1000 ml/$m^2$ . hr . mmHg (130 l/$m^2$ . hr . Pa) can be obtained. If a film is formed on the surface of a porous support in order to increase the strength of the membrane, a membrane having a water flux of at least 1000 ml/$m^2$ . hr . mmHg (130 l/$m^2$ . hr . Pa) can be obtained. In view of the self-supporting property of the membrane, the amount of the mixed solvent is preferably 2.3 to 8 parts by weight.

The role of the water-soluble organic compound in the mixed solvent is to increase the water permeability of the membrane tremendously, and to adjust its properties finally. Specifically, it has the following functions.

(1) Adjustment of the viscosity of the film-forming dope

The viscosity is decreased by adding a monohydric alcohol because the dope will become highly viscous when the dimethylsulfoxide/cellulose acetate ratio is small. When this ratio is high and the dope is of low viscosity, a dihydric alcohol is added to raise the viscosity of the dope. In short, the viscosity of the dope is adjusted to the one which permits easy film formation by a wet method. At a film forming

temperature (generally in the range of 0 to 80°C), the viscosity of the dope is adjusted to 10 to 100,000 poises (1 to 10,000 Pas), preferably 100 to 30,000 poises (10 to 3000 Pas), more preferably 300 to 3,000 poises (30 to 300 Pas).

(2) Adjustment of the performances of the membrane

Since a membrane having a relatively rough structure is formed from the dope containing the water-soluble organic compound in accordance with this invention, the membrane has an increased water permeability and a reduced retention of solutes of low to medium molecular weights. Since the performance of the membrane varies greatly depending upon other film-forming conditions, especially by a coagulating solution, it is necessary to consider performances of membranes and the film-forming conditions comprehensively.

(3) Adjustment of the properties of the membrane

Since the additives to the dope and the composition of the dope affect the properties, especially strength and elongation, of the membrane, the conditions should be prescribed with regard to the performances of the membrane.

The resulting dope containing cellulose acetate should desirably have a viscosity of generally 10 to 100,000 poises (1 to 10,000 Pas), preferably 100 to 30,000 poises (10 to 3,000 Pas), more preferably 300 to 3,000 poises (30 to 300 Pas) at the temperature of film casting, usually at 25°C.

The cellulose acetate-containing dope so prepared can be formed into permselective membranes in the form of flat film, tube, capillary or hollow filaments by a known wet-method film forming technique, for example the method disclosed in Peter R. Keller, "Membrane Technology and Industrial Separation Techniques" published in Park Ridge, New Jersey, U.S.A. by Noyes Data Corporation, pages 3—163, 1976. The desired permselective membrane can be formed by casting the cellulose acetate-containing dope prepared as above to form a raw membrane of a predetermined shape, and solidifying the raw membrane with a coagulating solution. More specifically, a permselective membrane in the form of a flat film can be produced by forming the dope prepared as above into a film by a device such as a slit die or doctor knife, casting it on a moving or non-moving flat casting surface while controlling its thickness, optionally allowing the cast raw membrane to stand or optionally evaporating some amount of the solvent, and then treating the raw membrane with a coagulating solution. The standing conditions such as the atmosphere, temperature, humidity and time are not as critical as in reverse osmosis membranes, but can be varied widely. Generally, a temperature of 0 to 60°C, preferably 10 to 40°C, and a relative humidity of 30 to 90% are selected. The standing time may be within 30 minutes because the volatility of DMSO is low. Generally, it is about 30 seconds. In an extreme case, the standing time may be zero by directly extruding the dope into a coagulating solution.

In the formation of a tubular permselective membrane, the cellulose acetate-containing dope is formed into a tubular wet raw membrane in a customary manner using an annular slit or a mandrel within a tubular support, and treating it in the same way as in the production of the flat film type membrane.

In the production of a permselective membrane in the form of capillaries or hollow fibers, the dope is wet-spun into capillaries or hollow fibers by using an annular nozzle (double tube or tube-in-orifice structure) or a segmented arc nozzle.

The cast wet raw material can generally have a thickness of 5 to 1000 micrometers, preferably 10 to 500 micrometers.

Coagulation of the raw membrane cast in the form of a film, tube, capillary or hollow fibers can be performed by dipping it in a coagulating solution, or contacting it intimately with a coagulating solution by spraying or other means, in a customary manner.

The coagulating solution is composed of a liquid which does not substantially dissolve cellulose acetate and is miscible with the mixed solvent used in the preparation of the film-forming dope (i.e., a non-solvent for the cellulose acetate). The coagulating solution has the function of solidifying cellulose acetate by diffusing or extracting the DMSO and the water-soluble organic compound from the cast raw membrane. The coagulating solution having such a function includes water, alcohols, and ethers. Examples of the alcohols are methyl alcohol, ethyl alcohol, and propyl alcohol, and examples of the ethers are acrylic ethers such as methyl ether and ethyl ether. The water, alcohols and ethers can be used as a coagulating solution either alone or as a mixture of two or more. For reference, the coagulating abilities and film-forming ability of typical coagulating solutions are shown in Table 2.

TABLE 2
Ability of non-solvents to coagulate the cellulose acetate dope (*1)

| Non-solvent (Volume ratio) \ Cellulose esters | Cellulose diacetate (*2) | | | Cellulose triacetate (*3) | | |
|---|---|---|---|---|---|---|
| | Rate | Appearance of the membrane | Strength of the membrane | Rate | Appearance of the membrane | Strength of the membrane |
| Water | High | Nontransparent | Medium | High | Nontransparent | Medium to high |
| Methyl alcohol | Medium | " | High | Medium | " | Low |
| Ethyl alcohol | " | " | " | " | " | Medium |
| Ethyl ether | Very low | — | — | Low | Semitransparent | Medium to high |
| Methyl alcohol/ ethyl ether (l/l) | Medium | Nontransparent | High | Medium | Nontransparent | Low |
| Ethyl alcohol/ ether ether (l/l) | " | " | " | " | Semitransparent | High |

(*1): 1 part by weight of cellulose ester and 10 parts by weight of dimethylsulfoxide.
(*2): H type made by Teijin Limited.
(*3): CTA-432, a product of Eastman Kodak Co.

Additives for controlling the balance between the rate of diffusing or extracting DMSO and the water-soluble organic compound from the cast raw membrane and the speed of coagulating the cellulose acetate may be added to the coagulating solution. Examples of such additives include salts such as sodium acetate, sodium sulfate, sodium chloride, sodium carbonate, calcium chloride and zinc chloride, alkalies such as sodium hydroxide, potassium hydroxide, sodium methylate and ammonium hydroxide, and acids such as hydrochloric acid, sulfuric acid, nitric acid and acetic acid. Alternatively, the rate of coagulating the cast raw membrane may be inhibited by adding the same DMSO and/or water-soluble organic compound as used in the preparation of the film-forming dope.

The temperature of the coagulating solution and the time during which the coagulating solution makes contact with the cast raw membrane can be determined within a broad range by considering the composition and proportion of the mixed solvent used in dope preparation and the composition of the coagulating solution. The temperature is generally room temperature, and the contacting time is about 0.1 to 10 minutes.

A raw membrane in the form of capillary or hollow fibers may be prepared by discharging the dope through an outside tube of a double tube nozzle and the aforesaid coagulating solution, the mixed solvent used in dope formation, DMSO, the aforesaid water-soluble organic compound, and other liquid or gas through an inside tube. When the coagulating solution is to be discharged from the inside tube, film formation and the coagulation treatment can be performed simultaneously.

The coagulated membrane, as required, may be subjected to scouring treatments such as washing with water or bleaching, or further to physical treatments such as stretching or heat-treatment.

The performances and/or mechanical properties of the resulting membrane may be improved by chemically treating (e.g., saponifying) it; modifying (e.g., grafting, or ionizing) it; or by physically treating (e.g., cross-linking by radiation) it. These chemical and physical treatments or modification can be performed by methods known *per se*, for example, those described in Robert E. Kesting, "Synthetic Polymeric Membranes" published by McGraw-Hill Book Company, New York, U.S.A., pages 55—226, 1971.

The storage stability of the membrane can be increased by treating it with glycerol or a surface-active agent, and the treated membrane can be stored in the dried state.

The process of the present invention described above has the commercial advantage that permselective membranes of high performances to be described below can be produced safely under normal temperature and pressure conditions from a film-forming solution (dope) of a relatively simple composition. Since DMSO and the water-soluble organic compounds used in the preparation of the film-forming dope are water-soluble, they can be substantially completely removed in the coagulating and washing steps, and do not remain substantially in the resulting membranes. Thus, the membranes provided by this invention are useful in the fields of manufacturing medical instruments and appliances, medicines, and foodstuffs.

Among the advantages of the permselective membranes of this invention are

(i) they have a very high water flux, or a high water ultrafiltration rate,
(ii) they have a very high protein retention, and
(iii) they is scarcely any decrease in the ultrafiltration rate of water in the ultrafiltration of medium-molecular-weight materials and proteins, especially albumin.

The permselective membranes provided by this invention generally have

(A) a porosity in the range of 40 to 95%, especially 60 to 90%,
(B) a water permeability of 5 to 2000 ml/m$^2$ . hr . mmHg (0.67 to 270 l/m$^2$ . hr . Pa), especially 10 to 1000 ml/m$^2$ . mmHg (1.3 to 130 l/m$^2$ . hr . Pa), and
(C) a protein retention in the range of 80 to 100%, especially 90 to 100%.

In the present specification and the appended claims, the "porosity" refers to a value calculated by the following equation.

$$\text{Porosity (\%)} = \left[ 1 - \frac{\text{Volume of the material for the membrane}}{\text{Volume of the membrane}} \right] \times 100 \qquad (1)$$

The volume of the material for the membrane is obtained by dividing the weight of the membrane material by the density of the membrane material, and the volume of the membrane is a value obtained by multiplying the unit area by the thickness of the membrane.

The porosity corresponds to the water content (52 to 87%) of a wet membrane composed of cellulose diacetate (specific gravity 1.34) and water (specific gravity 1.0), and for convenience, the water content can be used in lieu thereof.

Water-permeability is expressed by water flux per unit pressure (mmHg or Pa), and as is customarily used in the field of medical treatment, its unit is (ml/$m^2$ . hr . mmHg or l/$m^2$ . hr . Pa). The operating pressure is usually 0 to 1000 mmHg (0 to 133 kPa), and the water flux is measured at one or more points within the range of 200 to 600 mmHg (27 to 80 kPa).

Retention of solute is expressed by the following equation.

$$\text{Retention of solute (\%)} = \frac{S_0 - S}{S_0} \times 100 \qquad (2)$$

wherein

$S_0$ is the average concentration of a solute in the feed, and

S is the concentration of the solute in the filtrate that has permeated the membrane.

The permselectivity of the membrane in accordance with this invention varies according to the molecular weight of the solute, and the membrane has the following retention.

The retention of low-molecular-weight materials (with a molecular weight of about 100) such as sodium chloride (with a molecular weight of 58.5) and urea (with a molecular weight of 60) is as low as 0 to 10%, preferably substantially 0. The retention of medium-molecular-weight materials (with a molecular weight of about 1000) such as polyethylene glycol #1000 (with a molecular weight of 1000) or vitamin $B_{12}$ (with a molecular weight of 1355) can be prescribed according to the purpose of using the membrane if the membrane has a low water permeability of, say, 5 to 10 ml/$m^2$ . hr . mmHg (0.67 to 1.3 l/$m^2$ . hr . Pa). For example, when it is desired to recover valuable materials having a molecular weight of 1000, the retention can be preset at more than 90%. When it is desired to obtain a fraction with a molecular weight of 1000, the retention can be preset at 50%. Within a water permeability range of 10 to 1000 ml/$m^2$ . hr . mmHg (1.3 to 130 l/$m^2$ . hr . Pa), the retention of medium-molecular-weight materials is preset at not more than 10% so as to remove medium-molecular-weight materials into the filtrate as in hemofilters for artificial kidneys.

The retention of high-molecular-weight substances (with a molecular weight of more than 10000) such as ribonuclease (with a molecular weight of 13000), bovine serum albumin (with a molecular weight of 46000) and gamma-globulin (with a molecular weight of 160000) is 80 to 100%, preferably 90 to 100%, more preferably 95 to 100%. In preparations from blood or hemofilters for artificial kidneys, the freedom from leakage of blood proteins is preferred.

The permselective membranes provided by this invention generally have a thickness of 5 to 500 micrometers, preferably 10 to 300 micrometers.

Because of these performances, the membranes in accordance with this invention can be principal materials for ultrafilters and dialyzers, and find a wide range of applications in industrial and medical treatment fields. For example, they are suitable for recovery, purification, concentration, etc. of valuable materials in foodstuffs and pharmaceutical industries, and permit production of preparations from naturally occurring substances, blood, etc. and of sterilized water or pyrogen-free water. In the field of medical treamtent, these membranes can be used for the filtration or dialysis of the blood (artificial kidneys) or for the removal of hazardous materials from body fluids (artificial liver).

The permselective membranes provided by this invention have very high water-permeability as described hereinabove, and therefore, a sufficient water flux can be achieved at low pressures and low- and medium-molecular weight waste materials can be removed from the blood. Furthermore, they scarcely permit permeation of proteins which are valuable to the human body. Accordingly, the membrane in accordance with this invention is very suitable as a hemofilter for artificial kidneys. In using the membrane in accordance with this invention as a hemofilter for artificial kidneys, it is necessary to mold it into a membrane in the form of flat film or hollow filaments, and to build a filter out of the resulting membrane. Generally, the membrane is dipped in glycerol and dried, and is placed in a container so as to define a blood compartment and a filtrate compartment therein. Preferred methods of sterilization involve using an ethylene oxide gas or radioactive $\gamma$-rays. Heat sterilization is preferred because the membrane is toxin-free without any residue of ethylene oxide, but the water permeability of the membrane tends to decrease to less than about 1/3. However, such a membrane is still fully usable.

In using the permselective membrane in accordance with this invention in the aforesaid applications, the membrane can take various forms suitable for the respective uses, such as a flat membrane, spiral membrane, tubular, capillary and hollow filaments. It can be used in the form of a composite material on a porous support such as a woven knitted or non-woven fabric or paper. Such a composite material can be produced by bonding the membrane produced as above to the aforesaid support, or by directly casting the aforesaid cellulose acetate-containing dope onto the aforesaid support and treating it with a coagulating solution as described hereinabove.

The membrane provided by this invention may also be used as a support for a composite membrane for reverse osmosis with an ultrathin film laminated thereto.

The following examples illustrate the present invention more specifically.

Example 1

A dope was prepared from 1 part by weight of cellulose diacetate (H type, a product of Teijin Limited), 3 parts by weight of dimethylsulfoxide and 1 part by weight of ethyl alcohol. The dope was cast on a glass plate by a doctor knife having a thickness of 150 micrometers, and allowed to stand for 30 seconds in an atmosphere kept at room temperature. The glass plate having the dope cast thereon was dipped for 10 minutes in cold water to coagulate the cast membrane. A permselective membrane having an average thickness of 74 micrometers was obtained.

The water permeability (ultrafiltration rate UFR) of the resulting membrane with regard to pure water, and its solute retention and water flux in an aqueous solution of bovine serum albumin (molecular weight 46000; 0.1%) were measured. The porosity of the membrane was also measured. The results are shown in Table 3. The urea retention of this membrane was 0%, and its vitamin $B_{12}$ retention was 1%.

TABLE 3

| Example | Thickness of the membrane (micrometers) | UFR ml/$m^2$ . hr . mmHg (l/$m^2$ . hr . Pa) | Bovine serum albumin | | Porosity (%) |
|---|---|---|---|---|---|
| | | | Water flux ml/$m^2$ . hr . mmHg (l/$m^2$ . hr . Pa) | Retention (%) | |
| 1 | 74 | 187 (24.9) | 169 (22.5 | 97 | 73 |

UFR was measured by the following procedure. The permselective membrane was held by an in-line filter holder having a diameter of 47 mm made by Millipore Co. A transparent tube having an inside diameter of 5 mm and a length of 300 mm was connected to the top end of the holder. Pure water was filled into this tube, and pressurized with a nitrogen gas to a pressure of 200 to 600 mmHg (27 to 80 kPa). The amount of pure water decreased per unit time was measured.

The water flux and retention of the aqueous solution of bovine serum albumin were measured by using an ultrafiltration device (MC-2A type, a product of Bioengineering Co.). The membrane was fixed to the device, and pure water or an aqueous solution of bovine serum albumin was filled, and pressurized with nitrogen gas usually to 200 to 600 mmHg (27 to 80 kPa). The water flux per unit time ($ml/m^2 . hr$ or $l/m^2 . hr$), and the water permeability ($ml/m^2 . hr . mmHg$ or $l/m^2 . hr . Pa$) was calculated. On the other hand, the retention was calculated from the concentration of the solute (bovine serum albumin).

Comparative Example 1

A dope was prepared from 1 part by weight of cellulose diacetate and 4 parts by weight of dimethyl sulfoxide, and a membrane was prepared from it in the same way as in Example 1. The performances of the membrane were measured in the same way as in Example 1. Table 4 below shows the averages of the measured values on six samples and standard deviations. These samples had a porosity of 76 to 79%.

TABLE 4

| Comparative Example | Membrane thickness (micrometers) | UFR— ml/ $m^2 . hr . mmHg$ ($l/m^2 . hr . Pa$) | Bovine serum albumin | |
|---|---|---|---|---|
| | | | Water flux $ml/m^2 . hr . mmHg$ ($l/m^2 . hr . Pa$) | Retention (%) |
| 1 | 97±11 | (102±11 (13.6±1.47) | 93±10 (12.4±1.3) | 97±2 |

Comparative Examples 2 to 16

Various dopes were prepared from 1 part by weight of cellulose diacetate and 4 parts by weight of a mixed solvent composed of dimethylsulfoxide and an organic compound selected from acetone, triethyl phosphate and dimethylacetamide (the organic compounds outside the scope of the invention). Films were prepared from these dopes, and their properties were measured in the same way as in Example 1. The results are shown in Table 5. As is seen from Table 5, the water permeability abruptly decreased with an increase in the amount of the organic compound. This shows that the above organic compounds are undesirable as additives for the mixed solvent.

TABLE 5

| Amount of DMSO (parts by weight) | Acetone | | | Triethyl phosphate | | | Dimethylacetamide | | |
|---|---|---|---|---|---|---|---|---|---|
| | Comparative Example | Parts by weight | UFR-ml/$m^2$ hr . mmHg (l/$m^2$ . hr . Pa) | Comparative Example | Parts by weight | UFR-ml/$m^2$ hr . mmHg (l/$m^2$ . hr . Pa) | Comparative Example | Parts by weight | UFR-ml/$m^2$ hr . mmHg (i/$m^2$ . hr . Pa) |
| 3.75 | 2 | 0.25 | 108 (14.4) | 7 | 0.25 | 60 (8.0) | 12 | 0.25 | 10 (1.3) |
| 3.5 | 3 | 0.5 | 101 (13.5) | 8 | 0.5 | 40 (5.3) | 13 | 0.5 | 5 (0.67) |
| 3 | 4 | 1 | 52 (6.9) | 9 | 1 | 4 (0.5) | 14 | 1 | 7 (0.9) |
| 2 | 5 | 2 | 17 (2.3) | 10 | 2 | 4 (0.5) | 15 | 2 | 5 (0.67) |
| 0 | 6 | 4 | 0.1 (0.01) | 11 | 4 | — | 16 | 4 | 4 (0.5) |

Examples 2 to 6

In each run, a dope was prepared from 1 part by weight of cellulose diacetate and 4 parts by weight of a mixed solvent composed of dimethylsulfoxide and each of the monohydric alcohols shown in Table 6 in the amounts indicated. A membrane was formed from the dope, and its properties were measured, in the same way as in Example 1. The results are shown in Table 6. All of the membranes obtained showed superior performances.

TABLE 6

| Example | Monohydric alcohol | | Thickness of the membrane (micrometers) | UFR-ml/ $m^2$ . hr . mmHg ($l/m^2$ . hr . Pa) | Bovine serum albumin | | Porosity (%) |
|---|---|---|---|---|---|---|---|
| | Type | Amount (parts by weight) | | | Water flux ml/$m^2$ . hr . mmHg ($l/m^2$ . hr . Pa) | Retention (%) | |
| 2 | iso-Propyl alcohol | 0.5 | 68 | 173 (23.1) | 165 (22.0) | 96 | 70 |
| 3 | tert-Butyl alcohol | 1.5 | 68 | 175 (23.3) | 168 (22.4) | 97 | 71 |
| 4 | tert-Butyl alcohol | 2.0 | 83 | 494 (65.9) | 459 (61.2) | 95 | 75 |
| 5 | iso-Amyl alcohol | 2.0 | 84 | 123 (16.4) | 117 (15.6) | 98 | 74 |
| 6 | Allyl-alcohol | 0.25 | 62 | 143 (19.1) | 138 (18.4) | 98 | 68 |

Comparative Examples 17 to 20

Dopes were prepared from 1 part by weight of cellulose diacetate, 3 parts by weight of dimethylsulfoxide, and 1 part by weight of phenol or dihydric alcohols other than those specified in this invention. Membranes were formed from the dopes in the same way as in Example 1, and their water fluxes were measured. The results are shown below.

TABLE 7

| Comparative Example | Alcohol | UFR-ml/$m^2$ . hr . mmHg ($l/m^2$ . hr . Pa) |
|---|---|---|
| 17 | Methyl alcohol | 64 (8.5) |
| 18 | Cyclohexyl alcohol | 23 (3.1) |
| 19 | Benzyl alcohol | less than 0.1 (<0.01) |
| 20 | Phenol | 25 (3.3) |

Examples 7 to 15

Dopes were prepared from 1 part by weight of cellulose diacetate and 4 parts by weight of a mixture of dimethylsulfoxide and each of the dihydric alcohols shown in Table 8 in the amounts indicated. Membranes were formed from the dopes, and their properties were measured, in the same way as in Example 1. The results are shown in Table 8. These membranes had a high strength and were easy to handle.

The membranes of Example 14 had a wet tensile strength of 0.74 kg/$mm^2$ and an elongation of 43%. In contrast, the membrane of Comparative Example 1 had a wet strength of 0.51 kg/$mm^2$ and a break elongation of 36%.

TABLE 8

| Example | Dihydric alcohol | | Thickness of the membrane (micrometers) | UFR-ml/$m^2$ . hr . mmHg (l/$m^2$ . hr . Pa) | Bovine serum albumin | | Porosity (%) |
|---|---|---|---|---|---|---|---|
| | Type | Amount (parts by weight) | | | Water flux ml/$m^2$ . hr . mmHg (m/$m^2$ . hr . Pa) | Retention (%) | |
| 7 | Ethylene glycol | 0.25 | 73 | 158 (21.0) | 151 (20.1) | 97 | 71 |
| 8 | Ethylene glycol | 0.5 | 73 | 161 (21.4) | 153 (20.3) | 97 | 72 |
| 9 | Ethylene glycol | 1.0 | 71 | 97 (13) | 94 (12.5) | 98 | 70 |
| 10 | Propylene glycol | 0.5 | 96 | 144 (19.2) | 137 (18.2) | 97 | 76 |
| 11 | Diethylene glycol | 0.25 | 121 | 153 (20.3) | 144 (19.2) | 97 | 81 |
| 12 | Triethylene glycol | 0.5 | 71 | 115 (15.3) | 110 (14.6) | 98 | 69 |
| 13 | Tetraethylene glycol | 0.5 | 82 | 122 (16.2) | 116 (15.4) | 97 | 74 |
| 14 | Polyethylene glycol 400 | 0.25 | 64 | 148 (19.7) | 143 (19.0) | 97 | 65 |
| 15 | Polyethylene glycol 600 | 0.25 | 69 | 127 (16.9) | 122 (16.2) | 98 | 68 |

Comparative Examples 21 and 22

A dope was prepared from 1 part by weight of cellulose diacetate, 3.5 parts by weight of dimethylsulfoxide and 0.5 part by weight of butanediol-1,3 (Comparative Example 21) or polyethylene glycol 1000 (Comparative Example 22), and a membrane was produced from the dope and tested in the same way as in Example 1. The membrane of Comparative Example 21 had a water flux of 53 $ml/m^2 . hr . mmHg$ (7.0 $l/m^2 . hr . Pa$), and the membrane of Comparative Example 22 had a water permeability of 92 $ml/m^2 . hr . mmHg$ (12 $l/m^2 . hr . Pa$).

Examples 16 to 18 and Comparative Examples 23 to 25

A dope was prepared from 1 part by weight of cellulose diacetate and 4 parts by weight of a mixture of dimethylsulfoxide and each of the carboxylic acids shown in Table 9 in the amounts indicated. A membrane was produced from the dope and tested in the same way as in Example 1. The results are shown in Table 9. It is seen from the results obtained that membranes obtained by using formic acid or acetic acid as the water-soluble organic compound showed excellent results, whereas the use of propionic acid and n-butyric acid led to drastically reduced water fluxes.

TABLE 9

| Example (Ex.) or Comparative Example (CEx.) | Carboxylic acid | | Thickness of the membrane (micrometers) | UFR-ml/m$^2$ . hr . mmHg (l/m$^2$ . hr . Pa) | Bovin serum albumin | | Porosity (%) |
|---|---|---|---|---|---|---|---|
| | Type | Amount (parts) by weight) | | | Water flux ml/m$^2$ . hr . mmHg (l/m$^2$ . hr . Pa) | Retention (%) | |
| Ex. 16 | Formic acid | 0.25 | 72 | 117 (15.6) | 112 (14.9) | 98 | 69 |
| Ex. 17 | Formic acid | 0.5 | 83 | 135 (18.0) | 129 (17.2) | 98 | 74 |
| Ex. 18 | Acetic acid | 1.0 | 74 | 123 (16.4) | 115 (15.3) | 97 | 70 |
| CEx. 23 | Acetic acid | 2.5 | 88 | 18 (2.4) | — | — | — |
| CEx. 24 | Propionic acid | 0.5 | 73 | 6 (0.8) | — | — | — |
| CEx. 25 | n-Butyric acid | 0.5 | 63 | 2 (0.3) | — | — | — |

Example 19 and Comparative Example 26

A dope was prepared from 1 part by weight of cellulose diacetate, 2.2 parts by weight of dimethylsulfoxide and 0.8 part by weight of tert-butyl alcohol, and a membrane was produced from the dope in the same way as in Example 1 (Example 19). For comparison, a membrane was produced from a dope composed of 1 part by weight of cellulose diacetate and 3 parts by weight of dimethylsulfoxide (Comparative Example 26). The properties of these membranes are shown in Table 10.

TABLE 10

| | Thickness of the membrane (micrometers) | UFR-ml/$m^2$ . hr . mmHg (l/$m^2$ . hr . Pa) | Bovine serum albumin | | Porosity (%) |
|---|---|---|---|---|---|
| | | | Water flux ml/$m^2$ . hr . mmHg (l/$m^2$ . hr . Pa) | Retention (%) | |
| Example 19 | 88 | 35 (4.7) | 31 (4.1) | 99 | 68 |
| Comparative Example 26 | 62 | 29 (3.9) | 26 (3.5) | 99 | 65 |

Examples 20 and 21 and Comparative Example 27

Dopes were prepared from 1 part by weight of cellulose diacetate and 6 parts by weight of a mixture of dimethylsulfoxide and each of the alcohols shown in Table 11 in the amounts indicated. Membranes were prepared from the dopes and tested in the same way as in Example 1. The results are shown in Table 11. It is seen from the results that the membranes of this invention showed superior performances. In particular, the membrane obtained by using diethylene glycol as one component of the mixed solvent had about twice as high UFR as the membrane obtained by using dimethylsulfoxide alone as a solvent (Comparative Example 27), and moreover, its mechanical strength was improved.

The membrane of Example 21 had a wet strength of 0.33 kg/$mm^2$ and a break elongation of 24%. The membrane of Comparative Example 27 had a wet strength of 0.29 kg/$mm^2$ and a break elongation of 16%.

TABLE 11

| Example (Ex.) or Comparative Example (CEx.) | Alcohol | | Thickness of the membrane (micrometers) | UFR-ml/$m^2$ . hr . mmHg ($l/m^2$ . hr . Pa) | Bovine serum | | Porosity (%) |
|---|---|---|---|---|---|---|---|
| | Type | Amount (parts) by weight) | | | Water flux ml/$m^2$ . hr . mmHg ($l/m^2$ . hr . Pa) | Retention (%) | |
| Ex. 20 | Ethyl alcohol | 1.5 | 51 | 763 (101) | 771 (103) | 96 | 69 |
| Ex. 21 | Diethylene glycol | 0.4 | 80 | 426 (56.7) | 413 (54.9) | 97 | 90 |
| CEx. 27 | None | 0 | 60 | 253 (33.6) | 249 (33.1) | 97 | 74 |

Examples 22 to 24 and Comparative Examples 28 to 30

Dopes were prepared from 1 part by weight of cellulose diacetate and the amounts shown in Table 12 of dimethylsulfoxide and diethylene glycol. Each of the dopes was cast on the surface of a porous polyester filament material (non-woven fabric; basis weight 135 g/m²) by a doctor knife to a thickness of 200 micrometers, and dipped in cold water for 15 minutes to coagulate it. The properties of the resulting membranes were measured in the same way as in Example 1. The results are shown in Table 12. The thicknesses and porosities of the membranes could not be measured because the membrane and the non-woven material were united with each other.

TABLE 12

| Example (Ex.) or Comparative (Example (CEx.) | Mixed solvent (parts by weight) | | UFR-ml/m². hr. mmHg (l/m². hr. Pa) | Bovine serum albumin | |
|---|---|---|---|---|---|
| | Dimethyl sulfoxide | Diethylene glycol | | Water flux ml/m². hr. mmHg (l/m². hr. Pa) | Retention (%) |
| Ex. 22 | 9 | 1 | 765 (102) | 743 (98.8) | 97 |
| Ex. 23 | 13.5 | 1.5 | 1102 (146.6) | 1090 (145) | 95 |
| Ex. 24 | 18 | 2 | 1357 (180.5) | 1360 (181) | 81 |
| CEx. 28 | 10 | 0 | 451 (60.0) | 447 (59.5) | 97 |
| CEx. 29 | 15 | 0 | 896 (119) | 871 (116) | 93 |
| CEx. 30 | 20 | 0 | 1290 (172) | 1250 (166) | 82 |

Examples 25 and 26 and Comparative Example 31

Dopes were prepared from 1 part by weight of cellulose triacetate (CTA-432, a product of Eastman Kodak Co.) and 6 parts of a mixture of dimethylsulfoxide and tert-butyl alcohol in the amount shown in Table 13. Membranes were produced from the dopes and tested in the same way as in Example 1. It is seen from Table 13 that the membranes obtained by using tert-butyl alcohol as one component of the mixed solvent had superior water fluxes, and tert-butyl alcohol as one component of the mixed solvent aided in the dissolving of cellulose triacetate and could give a membrane having high uniformity.

TABLE 13

| Example (Ex.) or Comparative (Example (CEx.) | Amount of tert-butyl alcohol (parts by weight) | Thickness of the membrane (micrometers) | UFR-ml/$m^2$ . hr . mmHg (l/$m^2$ . hr . Pa) | Bovine serum albumin | | Porosity (%) |
|---|---|---|---|---|---|---|
| | | | | Water flux ml/$m^2$ . hr . mmHg (l/$m^2$ . hr . Pa) | Retention | |
| Ex. 25 | 0.4 | 126 | 331 (44.0) | 316 (42.0) | 98 | 88 |
| Ex. 26 | 0.7 | 139 | 418 (55.6) | 398 (52.9) | 98 | 89 |
| CEx. 31 | — | 56 | 98 (13) | 97 (13) | 99 | 73 |

Example 27 and Comparative Example 32

A dope was prepared from 0.5 part by weight of cellulose diacetate, 0.5 part by weight of cellulose triacetate, 4.5 parts by weight of dimethylsulfoxide and 1.5 parts by weight of ethyl alcohol. A membrane was prepared from the dope and tested in the same way as in Example 1.

For comparison, a dope was prepared in the same way as above except that 6 parts by weight of only dimethylsulfoxide was added as the solvent (Comparative Example 32). The results are shown in Table 14.

TABLE 14

| | Thickness of the membrane (micrometers) | UFR ml/m$^2$ . hr . mmHg (l/m$^2$ . hr . Pa) | Porosity (%) |
|---|---|---|---|
| Example 27 | 46 | 269 (35.8) | 65 |
| Comparative Example 32 | 58 | 125 (16.6) | 73 |

Examples 28 to 33

A dope composed of 1 part by weight of cellulose acetate, 3.75 parts by weight of dimethylsulfoxide and 0.25 parts by weight of diethylene glycol was cast on a glass plate in the same way as in Example 1. The membrane formed on the glass plate was dipped in each of the coagulating solutions shown in Table 15 at 25°C for 20 minutes to coagulate it. The solidified membrane was washed with water, and tested for its water flux. The results are shown in Table 14.

TABLE 14

| Example | Coagulating solution (volume ratio) | Thickness of the membrane (micrometers) | UFR-ml/m$^2$ . hr . mmHg (l/m$^2$ . hr . Pa) |
|---|---|---|---|
| 28 | Methyl alcohol | 125 | 158 (21.0) |
| 29 | Ethyl alcohol | 118 | 149 (19.8) |
| 30 | Methyl alcohol:water (1:1) | 124 | 181 (24.1) |
| 31 | Ethyl alcohol:water (1:1) | 110 | 149 (19.8) |
| 32 | Methyl alcohol:ethyl ether (1:1) | 105 | 127 (16.9) |
| 33 | Ethyl alcohol:ethyl ether (1:1) | 96 | 118 (15.7) |

Example 34

The same flat membrane as obtained in Example 1 was saponified in a 2% aqueous solution of sodium hydroxide at 80°C for 3 minutes to form a cellulose membrane, then treated with glycerol, and dried. The dried membrane obtained had a water UFR of 31 ml/m$^2$ . hr . mmHg (4.1 l/m$^2$ . hr . Pa).

Example 35

An outer support tube was made out of a non-woven tape, and its inside was coated with the dope prepared in Example 7 using a mandrel. The coated tube was dipped in water to coagulate the coating, followed by washing with water and treating with glycerol to form a tubular dry membrane having a diameter of 6 mm. The tubular dry membrane had a water UFR of 89 ml/m$^2$ . hr . mmHg (11.8 l/m$^2$ . hr . Pa), and a bovine serum albumin retention of 98%. It is seen that the resulting tubular membrane is useful for the concentration of high-molecular-weight material.

Example 36

A spinning dope prepared from 1 part by weight of cellulose diacetate, 2.5 parts by weight of dimethylsulfoxide and 0.5 part by weight of tert-butyl alcohol was filtered and defoamed. It was then extruded from an outside tube of a double-tube nozzle, and an 80% aqueous solution of dimethylsulfoxide was extruded from its inner tube. The extrudate was passed through the air, and then dipped in cold water to coagulate it. The filaments were washed with water and treated with glycerol, dried, and taken up at a rate of 10 meters/min. Hollow fibers having an outside diameter of 250 micrometers, an inside diameter of 200 micrometers and a cross-sectional shape near a true circle

were obtained. Two thousand such hollow fibers were bundled, and both ends of the bundle were embedded in urethane resin partition walls to build an ultrafiltration device. The performance of the ultrafiltration device was tested in the following manner.

An ultrafiltration test was performed at a pressure of 200 mmHg (27 kPa) while circulating a test aqueous solution through the device at a rate of 200 ml/min (0.2 l/min). The ultrafiltration device showed a UFR of 18.1 ml/m$^2$. hr. mmHg (2.41 l/m$^2$. hr. Pa), a vitamin $B_{12}$ retention of 3%, and a bovine serum albumin retention of 100%.

For comparison, the spinning dope was prepared in the same way as above except that tert-butyl alcohol was not added. It was difficult to filter and defoam the dope because it had a high viscosity.

Example 37 and 38

A solution consisting of 1 part by weight of cellulose diacetate, 3 parts by weight of dimethyl sulfoxide and 1 part by weight of ethyl alcohol was filtered and defoamed, and extruded from an outer tube of a double tube nozzle. Simultaneously, polyethylene glycol 400 (molecular weight 400) was extruded from its inner tube. The extrudate was passed through the air, and dipped in water to coagulate it. The extrudate was thereafter treated in the same way as in Example 36 to form hollow fibrous membrane (Example 37).

Hollow fibers (Example 38) were obtained in the same way as in Example 36 except that a water:methanol mixture (1:1) was used instead of cold water as a coagulating solution in the above procedure. The properties of the membranes are shown in Table 16.

TABLE 16

| Example | Spinning speed (m/min) | Filament size (micrometers) | | UFR-ml/m$^2$. hr. mmHg (l/m$^2$. hr. Pa) |
|---|---|---|---|---|
| | | Outside diameter | Inside diameter | |
| 37 | 20 | 310 | 250 | 115 (15.3) |
| 38 | 15 | 330 | 260 | 129 (17.2) |

Example 39

Three thousand hollow fiber membranes having an available length of 15 cm obtained in Example 37 were bundled, and a hemofilter for artificial kidneys having a membrane area of 0.35 m$^2$ was built. This hemofilter was small-sized with blood priming volume of only 30 ml (0.031). From the superior properties of the membrane used, a water flux of 40 ml/hr. mmHg (5.3 l/m$^2$. hr. Pa) was achieved.

As a model blood, an aqueous solution containing 0.5% of serum albumin and 0.1% of gamma-globulin was used, and a filtration test was performed at a pressure of 200 and 600 mmHg (27 and 80 kPa). No leakage of proteins was seen, and the total water flux of the dialyzer was 16 and 10 ml/hr. mmHg (2.1 and 1.3 l/hr. Pa). This result shows that the permselective membrane provided by the present invention can be sufficiently used as a hemofilter (for artificial kidneys). The safety of the present filter was tested by the methods shown in "Evaluation of Membranes for Hemodialyzers", National Institute of Health, U.S.A. NIH 74-605, and "Evaluation of Hemodialyzers", ibid., NIH 74-103, The 9th Revised Edition of Japan Pharmacopoeia, and Draft of Japan Standards for Artificial Kidneys. The present hemofilter was found to be acceptable in any of toxic and hemolytic properties, an eluate test, an acute toxicity test, and a hemolysis test.

## Claims

1. A process for producing a cellulose acetate-type permselective membrane having very high water-permeability and protein retention by casting a raw membrane from a dope comprising cellulose acetate and, as solvent, dimethylsulfoxide and solidifying the resulting raw membrane with a coagulating agent which is a non-solvent for the cellulose acetate and miscible with the solvent, characterised in that there is used a dope comprising

(a) 1 part by weight of a cellulose acetate, and
(b) 2 to 20 parts by weight of a mixed solvent composed of (i) dimethylsulfoxide and (ii) at least one water-soluble organic compound selected from monohydric alcohols having 2 to 5 carbon atoms, dihydric alcohols of the formula HO—(—RO—)$_n$—H wherein R is an alkylene group having 2 or 3 carbon atoms and n is an integer of 1 to 16, and carboxylic acids having 1 or 2 carbon atoms, the weight ratio of said water-soluble organic compound to dimethylsulfoxide being not more than 1:1.

2. A process according to claim 1, wherein said monohydric alcohol is ethyl alcohol, propyl alcohol, butyl alcohol or allyl alcohol.

3. A process according to claim 1, wherein said dihydric alcohol is ethylene glycol, diethylene glycol, a polyethylene glycol having an average molecular weight of 400 or propylene glycol.

4. A process according to claim 1, wherein said water-soluble organic compound is ethyl alcohol or tert-butyl alcohol.

5. A process according to any one of claims 1 to 4, wherein said dope consists of 1 part by weight of (a) cellulose acetate and 2.3 to 8 parts by weight of (b) the mixed solvent.

6. A process according to any one of claims 1 to 5, wherein said cellulose acetate is cellulose diacetate, cellulose triacetate or a mixture thereof.

7. A process according to any one of claims 1 to 6, wherein the weight ratio of said water-soluble organic compound to dimethylsulfoxide in said mixed solvent is from 0.05:1 to 0.7:1.

8. A process according to claim 7, wherein the coagulating agent is water, an alcohol or an ether.

9. A process according to any one of claims 1 to 8, wherein said membrane is produced in the form of a film, tube, capillary or hollow filament.

10. A permselective membrane produced by the process of any one of claims 1 to 9 and having (A) a porosity of 40 to 95%, (B) a water-permeability of 5 to 2000 ml/m$^2$ . hr . mmHg (0.67 to 270 l/m$^2$ . hr . Pa), and (C) a protein retention 80 to 100%.

11. A membrane according to claim 10 which has (A) a porosity of 60 to 90%, (B) a water-permeability of 10 to 1000 ml/m$^2$ . hr . mmHg (1.3 to 130 l/m$^2$ . hr . Pa), and (C) a protein retention of 90 to 100%.

12. An artificial kidney comprising as hemofilter, a membrane prepared by the process of any one of claims 1 to 9 or as claimed in claim 10 or 11.

## Patentansprüche

1. Verfahren zur Herstellung einer semipermeahlen Membran von Celluloseacetat-Typ mit einer hohen Wasserpermeabilität und Proteinretention, durch Gießen einer rohen Membran aus einer Gußmasse, umfassend Celluloseacetat und als Lösungsmittel Dimethylsulfoxid, und Verfestigen der erhaltenen rohen Membran mit einem Koagulationsmittel, das ein Nichtlösungsmittel für das Celluloseacetat darstellt und mit dem Lösungsmittel mischbar ist, dadurch gekennzeichnet, daß eine Lösung angewandt wird, umfassend

a) 1 Gew.-Teil eines Celluloseacetats und
b) 2—20 Gew.-Teil eines gemischten Lösungsmittels, bestehend aus (i) Dimethylsulfoxid und (ii) mindestens einer wasserlöslichen organischen Verbindung, ausgewählt aus einwertigen Alkoholen mit 2 bis 5 Kohlenstoffatomen, zweiwertigen Alkoholen der Formel $HO—(—RO)_nH$, in der R eine Alkylengruppe mit 2 oder 3 Kohlenstoffatomen und n eine ganze Zahl von 1 bis 16 bedeutet, und Carbonsäuren mit 1 oder 2 Kohlenstoffatomen, wobei das Gewichtsverhältnis der erwähnten wasserlöslichen organischen Verbindung zu Dimethylsulfoxid nicht mehr als 1:1 beträgt.

2. Verfahren nach Anspruch 1, wobei der einwertige Alkohol Ethylalkohol, Propylalkohol, Butylalkohol oder Allylalkohol ist.

3. Verfahren nach Anspruch 1, wobei der zweiwertige Alkohol Ethylenglykol. Diethylenglykol, ein Polyethylenglykol mit einem mittleren Molekulargewicht von 400 oder Propylenglykol ist.

4. Verfahren nach Anspruch 1, wobei die wasserlöslichen organische Verbindung Ethylalkohol oder tert.-Butylalkohol ist.

5. Verfahren nach einem der Ansprüche 1 bis 5, wobei die Gußmasse besteht aus einem Gew.-Teil (a) Celluloseacetat und 2,3 bis 8 Gew.-Teilen (b) des gemischten Lösungsmittels.

6. Verfahren nach einem der Ansprüche 1 bis 6, wobei das Celluloseacetat Cellulosediacetat, Cellulosetriacetat oder ein Gemisch davon ist.

7. Verfahren nach einem der Ansprüche 1 bis 6, wobei das Gewichtsverhältnis der wasserlöslichen organischen Verbindung zu Dimethylsulfoxid in dem gemischten Lösungsmiteel 0,05:1 bis 0.7:1 beträgt.

8. Verfahren nach Anspruch 7, wobei das Koagulationsmittel Wasser, ein Alkohol oder ein Ether ist.

9. Verfahren nach einem der Ansprüche 1 bis 8, wobei die Membran hergestellt wird in Form eines Films bzw. einer Folie, eines Schlauchs, von Kapillaren oder Hohlfasern.

10. Semipermeahle Membran hergestellt nach dem Verfahren nach einem der Ansprüche 1 bis 9, die (A) eine Porosität von 40 bis 95%, (B) eine Wasserpermeabilität von 0,67 bis 270 l/m$^2$ . h . Pa und (C) eine Proteinretention von 70 bis 100% aufweist.

11. Membran nach Anspruch 10, die (A) eine Porosität von 60 bis 90%, (B) eine Wasserpermeabilität von 1,3 bis 130 l/m$^2$ . h . Pa und (C) eine Proteinretention von 90 bis 100% aufweist.

12. Künstliche Niere, umfassend als Blutfilter, eine Membran, hergestellt nach dem Verfahren nach einem der Ansprüche 1 bis 9 oder wie in Anspruch 10 oder 11 angegeben.

**Revendications**

1. Procédé de production d'une membrane à perméabilité sélective du type acétate de cellulose présentant une perméabilité très élevée à l'eau et un taux de rétention très élevé des protéines, par coulée d'une membrane brute à partir d'un produit d'addition comprenant de l'acétate de cellulose et, en tant que solvant, du diméthylsulfoxyde, et en solidifiant la membrane brute obtenue à l'aide d'un agent de coagulation qui est un non-solvant vis-à-vis de l'acétate de cellulose et qui est miscible au solvant, caractérisé en ce que l'on utilise un produit d'addition comprenant:

(a) 1 partie en poids d'un acétate de cellulose, et
(b) 2 à 20 parties en poids d'un solvant mixte composé (i) de diméthylsulfoxyde et (ii) d'au moins un composé organique soluble dans l'eau choisi parmi les monoalcools ayant de 2 à 5 atomes de carbone, les dialcools de formule $HO—(—RO—)_n—H$ où R est un groupe alkylène ayant 2 ou 3 atomes de carbone et n est un nombre entier de 1 à 16, et des acides carboxyliques ayant 1 ou 2 atomes de carbone, le rapport pondéral entre le composé organique soluble dans l'eau et le diméthylsulfoxyde n'étant pas supérieur à 1:1.

2. Procédé selon la revendication 1, caractérisé en ce que le monoalcool est l'alcool éthylique, l'alcool propylique, l'alcool butylique ou l'alcool allylique.

3. Procédé selon la revendication 1, caractérisé en ce que le dialcool est l'éthylèneglycol, le diéthylèneglycol, un polyéthylèneglycol ayant un poids moléculaire moyen de 400 ou le propylèneglycol.

4. Procédé selon la revendication 1, caractérisé en ce que le composé organique soluble dans l'eau est l'alcool éthylique ou l'alcool tert-butylique.

5. Procédé selon l'une quelconque des revendications 1 à 4, caractérisé en ce que le produit d'addition se compose d'une partie en poids de l'acétate de cellulose (a) et de 2,3 à 8 parties en poids du solvant mixte (b).

6. Procédé selon l'une quelconque des revendications 1 à 5, caractérisé en ce que l'acétate de cellulose est le diacétate de cellulose, le triacétate de cellulose ou un de leurs mélanges.

7. Procédé selon l'une quelconque des revendications 1 à 6, caractérisé en ce que le rapport pondéral entre le composé organique soluble dans l'eau et le diméthylsulfoxyde dans le solvant mixte est compris entre 0,05:1 et 0,7:1.

8. Procédé selon la revendication 7, charactérisé en ce que l'agent de coagulation est l'eau, un alcool ou un éther.

9. Procédé selon l'une quelconque des revendications 1 à 8, caractérisé en ce que la membrane est produite sous la forme d'un film, d'un tube, d'un capillaire ou d'un filament creux.

10. Membrane à perméabilité sélective produite par le procédé selon l'une quelconque des revendications 1 à 9, et présentant (A) une porosité de 40 à 95%, (B) une perméabilité à l'eau de 5 à 2000 $ml/m^2 . h . mmHg$ (0,67 à 270 $l/m^2 . h . Pa$), et (C) un taux de rétention des protéines de 80 à 100%.

11. Membrane selon la revendication 10, présentant (A) une porosité de 60 à 90%, (B) une perméabilité à l'eau de 10 à 1000 $ml/m^2 . h . mmHg$ (1,3 à 130 $l/m^2 . h . Pa$) et (C) un taux de rétention des protéines de 90 à 100%.

12. Rein artificiel, comprenant en tant que filtre d'hémodialyse une membrane préparée par le procédé selon l'une quelconque des revendications 1 à 9, ou selon l'une quelconque des revendications 10 ou 11.